Europäisches Patentamt

European Patent Office

Office européen des brevets

(11) Publication number: **0 372 964**
**A2**

## EUROPEAN PATENT APPLICATION

(21) Application number: 89312775.3

(22) Date of filing: 07.12.89

(51) Int. Cl.5: **G06K 11/08, G06F 11/16**

(30) Priority: 08.12.88 US 281419

(43) Date of publication of application:
**13.06.90 Bulletin 90/24**

(84) Designated Contracting States:
**DE FR GB IT NL**

(71) Applicant: **TEKTRONIX, INC.**
**Howard Vollum Park 14150 S.W. Karl Braun**
**Drive P.O. Box 500**
**Beaverton Oregon 97077(US)**

(72) Inventor: **Meadows, Robert David**
**15115 S W Barlow Court**
**Beaverton Oregon 97005(US)**
Inventor: **McCoy, Roger J.**
**1724 S W Troy Street**
**Portland Oregon 97219(US)**
Inventor: **Murdock, Bruce**
**16904 N W Somerset Drive**
**Beaverton Oregon 97006(US)**

(74) Representative: **Bryer, Kenneth Robert et al**
**Hepworth Lawrence & Bryer 15th Floor,**
**Terminus House Terminus Street**
**Harlow Essex CM20 1XD(GB)**

(54) **Touch detection apparatus for optical touch panel system.**

(57) An optical touch panel system (10) includes a touch detection apparatus (12) that detects contact between a stylus (44) and a display surface (14). The touch detection apparatus includes an electrically conductive, optically transparent layer (58) positioned adjacent to the display surface and having a substantially constant resistivity. The conductive layer forms a part of a resonant circuit (80) that is tuned to, and receives a signal of, a preselected frequency. Contact between the stylus and the conductive layer interferes with the resonance characteristic of the circuit and thereby provides an indication of the contact.

FIG.1

Xerox Copy Centre

## TOUCH DETECTION APPARATUS FOR OPTICAL TOUCH PANEL SYSTEM

### Technical Field

The present invention relates to touch panel systems of the type having multiple light emitting and light detecting elements and, in particular, to such a system in which a touch detection apparatus generates a control signal indicative of contact between a stylus and a display surface.

### Background of the Invention

A touch panel system is a data input device that allows an operator to interact with information rendered on a display surface. For example, the operator can select one of multiple computer command options rendered at different locations on the display surface by touching the surface at one of the locations. A touch panel system employs an address encoding circuit that generates an address signal that is indicative of the touched location. The address signal is delivered to a computer that determines from the address signal which one of the command options is selected. The object with which the operator touches the display surface is called a "stylus" and may include, for example, the operator's finger, a pen, or a pencil.

A touch panel system of the optical-type typically includes multiple infrared light-emitting diodes that are positioned opposite corresponding ones of multiple infrared photodetectors. The light-emitting diodes and the photodetectors are positioned about the periphery of the display surface of a display device. The light-emitting diodes generate an array of intersecting light beams that propagate across the front and near the surface of the display surface for distinguishing a location indicated by a stylus. In particular, the touch panel system distinguishes the location indicated by the stylus from other locations on the display surface by determining which ones of the light beams are interrupted by the stylus.

An exemplary optical touch panel system employs a pair of substantially linear arrays of light-emitting diodes positioned along, respectively, the top side margin and the left side margin of the display surface. The light-emitting diodes positioned along the top and left side margins extend in respective X-axis and Y-axis directions along the display surface. The light-emitting diodes positioned along the top side margin cooperate with photodetectors arranged in a substantially linear array along the bottom side margin of the display surface to identify the X-axis coordinate of a stylus pointed at the display surface. Similarly, the light-emitting diodes positioned along the left side margin cooperate with photodetectors arranged in a substantially linear array along the right side margin of the display surface to identify the Y-axis coordinate of the stylus.

Since the touch panel system distinguishes a selected location by determining which ones of the light beams are interrupted, the touch panel system can erroneously distinguish a selected location when the light beams are interrupted by an object other than a stylus contacting the display surface. For example, an error of a first type occurs when the light beams are interrupted by a nonstylus object (e.g., an insect) in contact with the display surface. An error of a second type occurs when the light beams are interrupted by a stylus that is pointed at, but does not touch, the display surface.

With respect to an error of the first type, a nonstylus object in contact with the display surface would typically have electrical or physical characteristics that differ from those of the stylus. A conventional optical touch panel system is incapable of distinguishing such characteristics. With respect to an error of the second type, a typical display surface is of convex shape so that the paths along which the light beams propagate are positioned very close to the center of the display surface but are separated from the side margins of the display surface by significant distances. As a consequence, most errors of the second type occur when a user points a stylus at a location near an edge of the display surface.

### Summary of the Invention

An object of the present invention is, therefore, to provide a touch detection apparatus for an optical touch panel system.

Another object of this invention is to provide such an apparatus that is capable of preventing the optical touch panel system from erroneously indicating a selected location.

A further object of this invention is to provide such an apparatus that detects contact between a display surface and a stylus having preselected characteristics.

The present invention is a touch detection apparatus for an optical touch panel system. The touch detection apparatus detects contact between a stylus and the system display surface. In a first preferred embodiment, the touch detection apparatus includes an electrically conductive, optically transparent layer of uniform resistivity that is deposited on and covers substantially all of the display surface. The display surface may include the display screen of a display device or an optically transparent faceplate positioned near such a display screen.

The touch detection apparatus detects contact between the display surface (i.e., the conductive layer) and a capacitive stylus by detecting a change in the impedance of the conductive layer resulting from such contact. In particular, the conductive layer forms a part of a resonant circuit that is tuned to, and receives a signal of, a known frequency. The stylus has a nonzero, finite capacitance with respect to electrical ground. Contact between the stylus and the conductive layer interferes with the resonance characteristics of the circuit and thereby provides an indication of such contact.

Whenever the stylus contacts the conductive layer, the touch detection apparatus generates a control signal in a first logic state, and the touch panel system forms an address signal representing the location indicated by the stylus. Whenever the stylus does not contact the conductive layer, the touch detection apparatus generates the control signal in a second logic state, and the touch panel system forms no address signal. The touch detection apparatus of the present invention is, therefore, capable of detecting contact between a display surface and a stylus, thereby to prevent the touch panel system from erroneously indicating a selected location.

In a second preferred embodiment of the present invention, a pressure transducer cooperates with a faceplate that supports the display surface to detect contact between the display surface and the stylus. In particular, the pressure transducer detects pressure imparted against the faceplate by the stylus. In a third preferred embodiment of the present invention, a piezoelectric transducer is coupled to the display surface to generate acoustic surface waves thereon. A stylus of sufficient mass in contact with the display surface changes the amplitude of the acoustic waves to provide an indication of contact between the stylus and the display screen.

Additional objections and advantages of the present invention will be apparent from the detailed description of preferred embodiments thereof, which proceeds with reference to the accompanying drawings.

Brief Description of the Drawings

Fig. 1 is a schematic front view of an optical touch panel system including the touch detection apparatus of the present invention.

Fig. 2 is a composite fragmentary side view of the touch panel system of Fig. 1 and schematic circuit diagram of the circuitry employed in a first preferred embodiment of the touch detection apparatus.

Fig. 3 is a diagram showing exemplary voltage signal waveforms on different nodes of the circuit depicted in Fig. 2.

Figs. 4A and 4B are composite fragmentary side views of the touch panel system of Fig. 1 and schematic circuit diagrams of alternative circuitry employed in the first preferred embodiment of the touch detection apparatus.

Fig. 5 is a schematic side view of the touch panel system of Fig. 1 modified to incorporate a second preferred embodiment of the touch detection apparatus of the present invention.

Fig. 6 is a schematic sideview of the touch panel system of Fig. 1 modified to incorporate a third preferred embodiment of the touch detection apparatus of the present invention.

Fig. 7 is a circuit block diagram of a touch detection subcircuit employed in the touch detection apparatus of Fig. 6.

Detailed Description of Preferred Embodiments

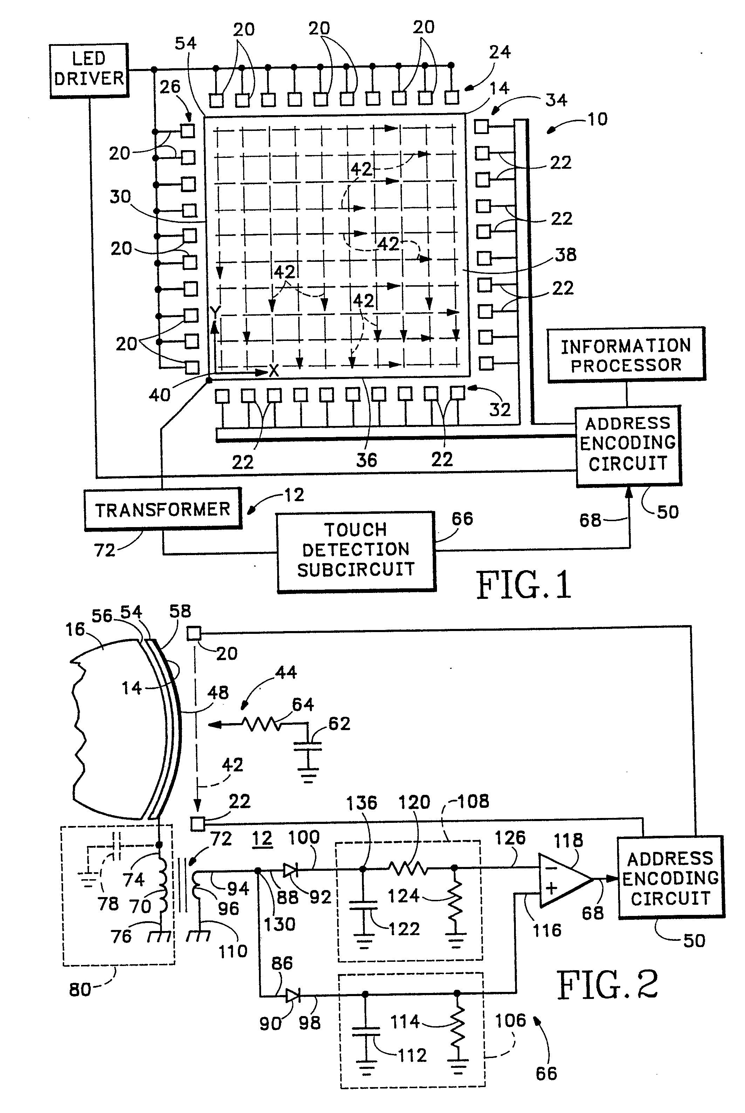

Fig. 1 shows an optical touch panel system 10 that includes a touch detection apparatus 12 of the present invention. With reference to Fig. 1, touch panel system 10 is positioned adjacent a display surface 14 of a display device such as, for example, a cathode-ray tube 16 (Fig. 2). It will be appreciated, however, that the display device could alternatively be a liquid crystal display, a printed signboard, or any other type of display apparatus.

Touch panel system 10 includes multiple infrared light-emitting diodes 20 positioned opposite corresponding ones of multiple infrared photodetectors 22. Light-emitting diodes 20 are arranged in a first substantially linear array 24 and a second substantially linear array 26 that are positioned, respectively, along a top side margin 28 and a left side margin 30 of display surface 14. Photodetectors 22 are arranged in a third substantially linear array 32 and a fourth substantially linear array 34 that are positioned, respectively, along a bottom side margin 36 and a right side margin 38 of display surface 14.

The light-emitting diodes 20 positioned along side margins 28 and 30 extend in respective X-axis and Y-axis directions along display surface 14. The X- and Y-axes have an origin 40 positioned near the lower left corner of display surface 14. Each one of light-emitting diodes 20 generates a light beam 42 that is directed toward a corresponding one of the photodetectors 22. The light beams 42 generated by the light-emitting diodes 20 positioned along top side margin 28 and left side margin 30 function as, respectively, an X-directional component and a Y-directional component of a location-detecting grid of light beams. Accordingly, light-emitting diodes 20 positioned along top side margin 28 cooperate with photodetectors 22 positioned along bottom side margin 36 to define the X-axis coordinate of a stylus 44 (schematically shown in Fig. 2) pointed at display surface 14. Similarly, light-emitting diodes 20 positioned along left side margin 30 cooperate with photodetectors 22 positioned along right side margin 38 to define the Y-axis coordinate of stylus 44.

Light beams 42 generated by light-emitting diodes 20 propagate across and proximal to display surface 14. Whenever it is pointed at a selected location 48 (Fig. 2) on display surface 14, stylus 44 interrupts certain ones of light beams 42 generated by light-emitting diodes 20. The photodetectors 22 toward which the interrupted light beams are directed detect the absence of the light beams and thereby indicate the interruption caused by and the location 48 of stylus 44. Photodetectors 22 deliver signals indicative of location 48 to an address encoding means or circuit 50, which receives the signals and generates an address signal representing location 48.

Fig. 2 is a fragmentary side view of cathode-ray tube 16 and touch detection apparatus 12, which includes a faceplate 54 positioned face-to-face with the display screen 56 of cathode-ray tube 16. The outer major surface of faceplate 54 functions as display surface 14 and includes an optically transparent, electrically conductive layer 58 of uniform resistivity that covers substantially all of the surface. Layer 58 is preferably formed from indium tin oxide.

Touch detection apparatus 12 detects contact between display surface 14 and capacitive stylus 44 such as, for example, a user's finger. Stylus 44 may be modeled as a capacitor 62 and a resistor 64 electrically connected in series to ground. Capacitor 62 can have a capacitance of between 5 and several hundred picofarads, and resistor 64 can have almost any resistance. Touch detection apparatus 12 detects contact between display surface 14 and stylus 44 by detecting a change in the impedance of conductive layer 58 resulting from such contact.

Touch detection apparatus 12 includes a touch detection electrical subcircuit 66 that is inductively coupled to conductive layer 58 to generate a control signal indicative of contact between display surface 14 and stylus 44. The control signal is delivered to a control input 68 of address encoder circuit 50 to control the generation of an address signal. Conductive layer 58 is connected to subcircuit 66 via the primary coil 70 of a transformer 72. Primary coil 70 has an inductance of 110 millihenries and is arranged so that its positive terminal 74 and negative terminal 76 are electrically connected to conductive layer 58 and ground, respectively.

Conductive layer 58 has a relatively large surface area (e.g., about 1100 cm$^2$) that causes the layer to function as a capacitor 78 (shown in phantom) of about 250 picofarads that is electrically connected to ground. Conductive layer 58 (i.e., capacitor 78) and primary coil 70 form an LC tank 80 that functions as an electrical resonating means or circuit that is tuned to resonate at a preselected frequency. The preselected frequency is an integral multiple of a timing signal that is applied to cathode-ray tube 16 and generates "free" or "stray" electromagnetic energy that is received by conductive layer 58.

Cathode-ray tube 16 forms an image on display screen 56 by scanning an electron beam (not shown) in a raster pattern across the screen. Such an image is formed of image frames that include between about 200 and 2,000 horizontal scan lines and are addressed at frequencies of 50 or 60 Hz. The beam current of the scanning electron beam changes in accordance with the magnitude of a video signal that carries information representing the image to be rendered. The video signal further includes for each horizontal scan line a flyback or retrace pulse that directs the electron beam to return to a starting scan position after the completion of each successive horizontal scan line. The flyback pulses relate in a one-to-one fashion to the horizontal scan lines, occur at frequencies of about 15-200 kHz, and constitute the timing signal that is capacitively induced on conductive layer 58.

Touch detection apparatus 12 detects contact between display surface 14 and stylus 44 by determining whether LC tank 80 is resonating. Whenever stylus 44 contacts display surface 14, touch detection subcircuit 66 delivers a control signal indicative of a TOUCH state to control input 68. Whenever stylus 44 does not contact display surface 14, touch detection subcircuit 66 delivers a control signal indicative of a NO TOUCH state to control input 68.

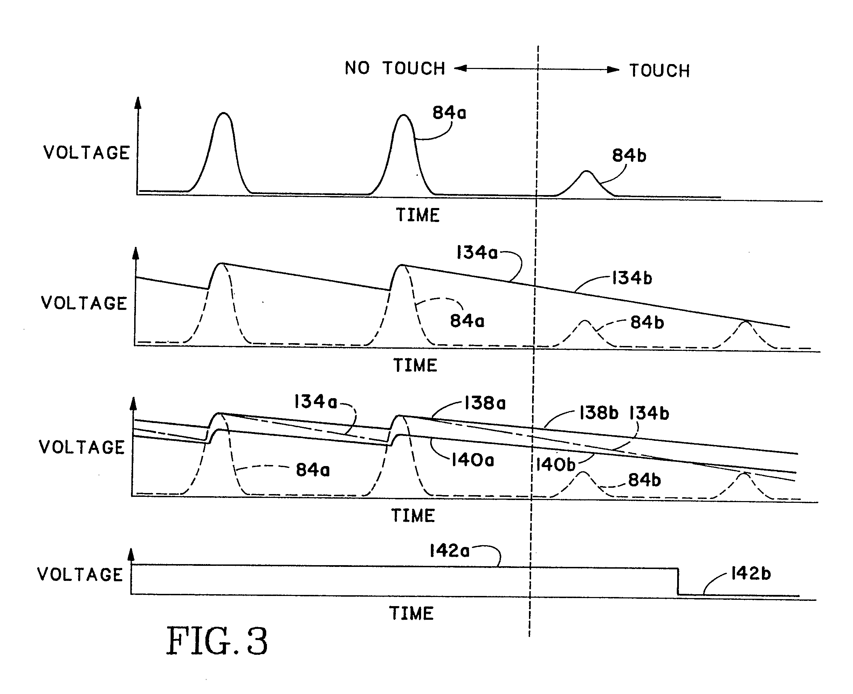

In the NO TOUCH state, the flyback pulses that conductive layer 50 receives from cathode-ray tube 16 cause LC tank 80 to generate a detection signal 84a (Fig. 3) that resonates at the preselected frequency. Resonating detection signal 84a is delivered to anodes 86 and 88 of respective diodes 90 and 92 via the positive terminal 94 of the secondary coil 96 of transformer 72. The cathodes 98 and 100 of diodes 90 and 92 deliver resonating detection signal 84a to a "fast" (i.e., small time constant) RC circuit 106 and a "slow" (i.e., large time constant) RC circuit 108, respectively. The negative terminal 110 of secondary coil 96 is electrically connected to ground.

Fast RC circuit 106 includes a capacitor 112 of 0.01 microfarads and a resistor 114 of 4.7 megohms that are connected in parallel between ground and the positive input 116 of a comparator 118. Slow RC circuit 108 includes a resistor 120 of 1.5 megohms positioned between a capacitor 122 of 10 microfarads and a resistor 124 of 4.7 megohms, both of which are electrically connected to ground. Resistors 120 and 124 function as a voltage divider whose output is connected to the negative input 126 of comparator 118. Circuits 106 and 108 have respective time constants $T_f$ of 0.047 seconds and $T_g$ of 62 seconds.

With reference to Figs. 2 and 3, touch detection subcircuit 66 in the NO TOUCH state receives at a circuit node 130 the resonating detection signal 84a generated by LC tank 80. Fast RC circuit 106 receives resonating detection signal 84a and delivers to positive input 116 of comparator 118 a fast decay signal 134a corresponding to the NO TOUCH state. Slow RC circuit 108 also receives resonating detection signal 84a and generates at a circuit node 136 a slow decay signal 138a that has a slower decay rate than that of signal 134a, and corresponds to the NO TOUCH state. Resistors 120 and 124 divide voltage signal 138a and deliver to negative input 126 of comparator 118 an attenuated slow decay signal 140a corresponding to the NO TOUCH state.

For purposes of illustration, Fig. 3 shows the comparative relationship between signals 134a, 138a, and 140a and signal 84a. It will be appreciated that voltages 134a, 138a, and 140a decrease relative to the maximum voltage of signal 84a because of voltage drops across diodes 90 and 92.

In the NO TOUCH state, detection signal 84a charges capacitors 112 and 122 at a greater rate than that at which voltages on the respective circuits 106 and 108 decay. As a result, the voltage magnitude of fast decay signal 134a remains greater than the voltage magnitude of attenuated slow decay signal 140a. Comparator 118 generates, therefore, a control signal 142a that is delivered to control input 68 of address encoder circuit 50 and functions as a circuit disable command, thereby preventing circuit 50 from generating an address signal.

Touch detection subcircuit 66 in the TOUCH state receives at circuit node 130 a nonresonating detection signal 84b that is generated by LC tank 80 in combination with stylus 44. Fast RC circuit 106 receives nonresonating detection signal 84b and delivers to positive input 116 of comparator 118 a fast decay signal 134b corresponding to the TOUCH state. Slow RC circuit 108 also receives nonresonating detection signal 84b and generates at circuit node 136 a slow decay signal 138b that corresponds to the TOUCH state. Resistors 120 and 124 divide voltage signal 138b and deliver to negative input 126 of comparator 118 an attenuated slow decay signal 140b corresponding to the TOUCH state.

In the TOUCH state, detection signal 84b charges capacitors 112 and 122 at a lesser rate than that at which voltages on the respective circuits 106 and 108 decay. As a result, the voltage magnitude of fast decay signal 134b decays to a voltage that is less than the voltage magnitude of attenuated slow decay signal 140b. Comparator 118 generates, therefore, a control signal 142b that is delivered to control input 68 of address encoder circuit 50 and functions as a circuit enable command. Accordingly, address encoder circuit 50 generates an address signal corresponding to the light beams 42 that are interrupted by stylus 44.

The comparison of the fast decay signals 134a and 134b with the respective attenuated slow decay signals 140a and 140b provides touch detection subcircuit 66 with an automatic gain control characteristic. In particular, the signals 134a, 134b, 140a, and 140b are generated with reference to the maximum amplitudes of detection signals 84a and 84b. As a result, variations in the maximum amplitudes of detection signals 84a and 84b do not affect the amplitudes of fast decay signals 134a and 134b relative to the amplitudes of attenuated slow decay signals 140a and 140b. Variations in the amplitudes of signals 84a and 84b can be caused by, for example, drive signal variations or circuit component performance variations. Touch detection subcircuit 66 is, therefore, substantially independent of variations in the amplitude or gain of detection signals 84a and 84b.

The preselected frequency at which LC tank 80 is set to resonate cooperates with the characteristics of transformer 72 to provide flexibility in the design of touch detection apparatus 12. In particular, the preselected frequency at which LC tank 80 is set to resonate is an integral multiple (e.g., two) of the frequency of the flyback pulses. The preselected frequency is selected so that the relatively small capacitive reactance of stylus 44 can divert a significant amount of current from conductive layer 58 and thereby effect a relatively large change in the magnitude of the touch detection signal. Primary coil 70 has about 10 times as many turns as those of secondary coil 96. This 10-to-1 turns ratio for transformer 72 is selected to provide detection signals of several volts to RC circuits 106 and 108. Setting the preselected frequency at higher multiples of the flyback pulse frequency provides proportionally larger changes in the magnitude of the touch detection signal during the TOUCH and NO TOUCH states, thereby allowing a reduction in the turns, size, and cost of transformer 72.

The decay time constants $T_f$ and $T_s$ of circuits 106 and 108 are represented by the equations:

$$T_f = C_1 R_1$$
$$T_s = (R_2 + R_3)C_2$$

in which the resistances of resistors 114, 120, and 124 are represented as $R_1$, $R_2$, and $R_3$ and in which the capacitances of capacitors 112 and 122 are represented as $C_1$ and $C_2$, respectively. Touch detection subcircuit 66 employs AC coupling to conductive layer 58 such that control signals 142a and 142b represent the polarity of the difference between decay signals 134 and 140. Alternatively, a DC voltage supply (not shown) can be substituted for diode 92 and slow RC circuit 108 to provide a DC-coupled touch detection subcircuit, thereby allowing subcircuit 66 to provide continuous touch information.

Touch detection apparatus 12 receives the touch detection signal as free electromagnetic energy corresponding to the flyback pulses of the video signal. Display devices in which this type of electromagnetic energy is not generated such as, for example, a printed signboard, employ a voltage signal source (not shown) that is coupled to conductive layer 58 to generate a touch detection signal for the touch detection apparatus.

Transformer 72 provides electrical isolation between conductive layer 58 and system supply voltages within touch detection subcircuit 66. This electrical isolation protects a system operator from system supply voltages that may be delivered to secondary coil 96. If such protection is not necessary, however, a ground-connected inductor (not shown) may be substituted for transformer 72.

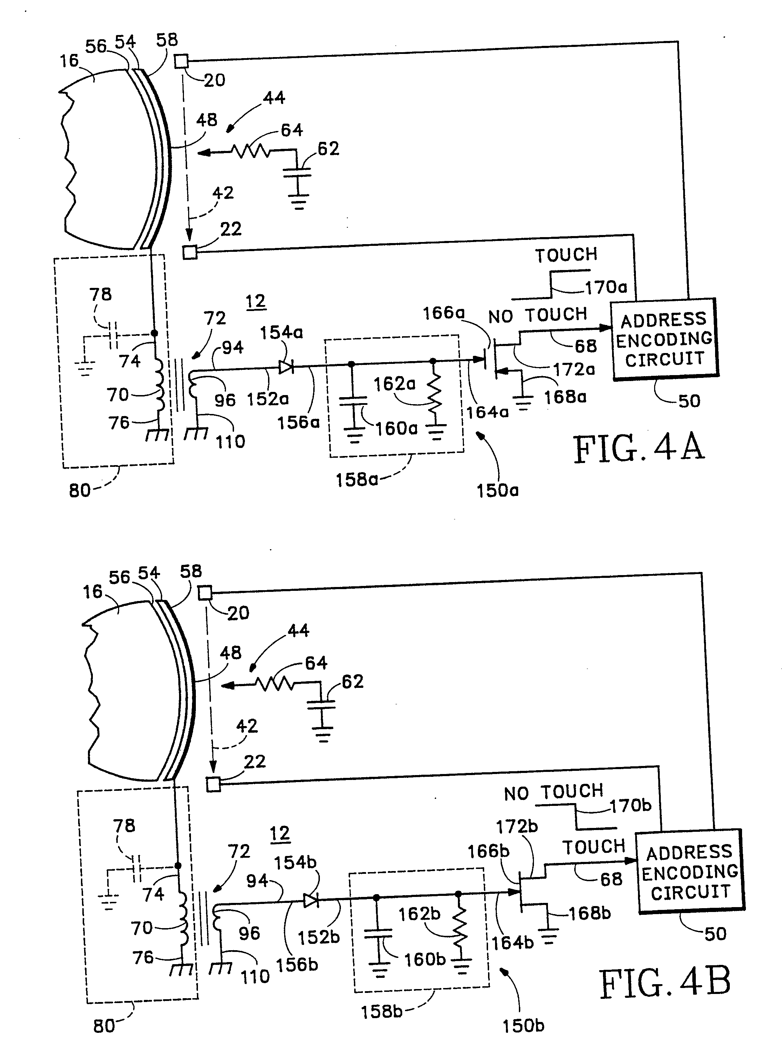

Figs. 4A and 4B show alternative touch detection subcircuits 150a and 150b employed in touch detection apparatus 12. Corresponding components of touch detection subcircuits 150a and 150b have identical reference numerals with letter suffices "a" and "b", respectively. The following description is directed by way of example primarily to touch detection subcircuit 150a.

In the NO TOUCH state, the flyback pulses conductive layer 58 receives from cathode-ray tube 16 cause LC tank 80 to generate a detection signal that resonates at the preselected frequency. The resonating detection signal is delivered to an anode 152a of a diode 154a via positive terminal 94 of secondary coil 96. The cathode 156a of diode 154a delivers the resonating detection signal to an RC circuit 158a that includes a capacitor 160a and a resistor 162a connected in parallel between ground and the gate 164a of a n-channel metal-oxide semiconductor field-effect transistor (MOSFET) 166a. Capacitor 160a and resistor 162a cooperate to provide RC circuit 158a with a decay period that defines the rate at which touch detection subcircuit 150a switches between the TOUCH and NO TOUCH states. The source 168a of MOSFET 166a is electrically connected to ground, and MOSFET 166a develops control signal 170a on its drain 172a as follows.

The touch detection signal RC circuit 158a receives changes between large and small voltage magnitudes in the NO TOUCH and TOUCH states, respectively, as described above with reference to touch detection subcircuit 66 of Fig. 2. Whenever stylus 44 does not contact conductive layer 58, gate 164a of MOSFET 166a receives a relatively constant input voltage of relatively large magnitude that causes MOSFET 166a to generate at drain 172a the control signal 170a in a low logic state. Whenever stylus 44 contacts conductive layer 58, gate 164a of MOSFET 166a receives an input voltage of decreasing magnitude that causes MOSFET 166a to generate at drain 172a a control signal 170 in a high logic state. The decay period established by capacitor 160 and resistor 162 is selected to provide (1) relatively little voltage decay between successive pulses of the touch detection signal, and (2) a decay that is rapid enough to provide relatively fast detection of a TOUCH state.

Touch detection circuit 150b differs from subcircuit 150a in that the former employs an n-channel junction field-effect transistor (JFET) 166b rather than MOSFET 166a. The operation of touch detection subcircuit 150b is substantially similar to that of subcircuit 150a except that control signal 170b switches between low and high logic signal levels for the TOUCH and NO TOUCH states, respectively. In addition, anode 152b and cathode 156b of diode 154b are connected to RC circuit 158b and positive terminal 94, respectively to accommodate this "negative" operation of JFET 166b.

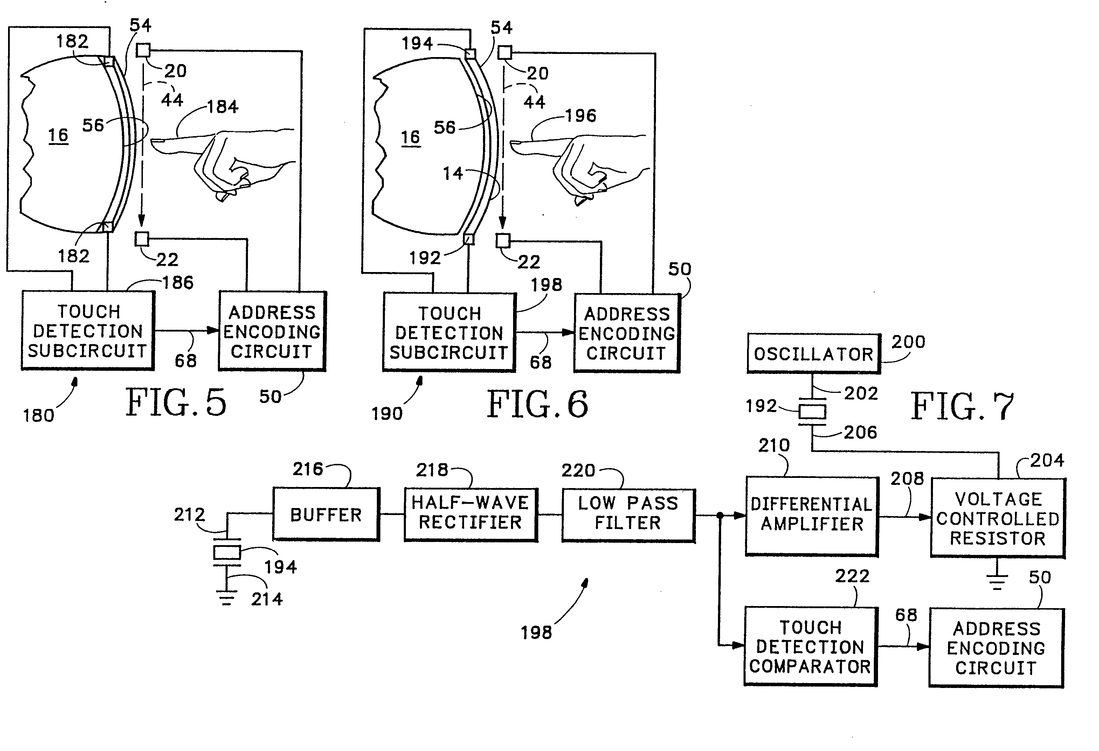

Fig. 5 is a schematic side view of a touch detection apparatus 180 that is a second preferred embodiment of the present invention. Touch detection apparatus 180 includes four pressure transducers 182 (only two shown) secured in fixed positions near side margins 28, 30, 36, and 38 (Fig. 1) of display surface 14. Pressure transducer 182 communicates with faceplate 54 to measure the pressure exerted against the faceplate by a stylus 184. Transducer 182 delivers to a touch detection subcircuit 186 a touch detection signal representing the amount of pressure exerted against faceplate 54. Touch detection subcircuit 186 generates a control signal that is delivered to control input 68 of address encoding circuit 50. One type of pressure transducer that may be employed in touch detection apparatus 180 is a "Force Sensitive Resistor" manufactured by Interlink of Santa Barbara, California.

Fig. 6 is a schematic side view of a touch detection apparatus 190 that is a third preferred embodiment of the present invention. Touch detection apparatus 190 includes a driving piezoelectric transducer 192 and a sensing piezoelectric transducer 194 coupled to faceplate 54. Transducer 192 generates acoustic waves of a preselected amplitude on display surface 14, and transducer 194 detects the acoustic waves and generates an AC sensing signal corresponding to the amplitude of them. Contact between faceplate 54 and a stylus 196 having at least a threshold amount of mass decreases the amplitude of the acoustic waves generated by transducer 192. Transducer 194 detects the decreased amplitude of the acoustic waves and generates an AC sensing signal indicative of the contact between faceplate 54 and stylus 196, as described below in greater detail.

Fig. 7 is a circuit block diagram showing a touch detection subcircuit 198 electrically connected to transducers 192 and 194. Touch detection subcircuit 198 includes an oscillator circuit 200 that delivers a driving signal of a fixed amplitude to a first terminal 202 of transducer 192. A voltage controlled resistor 204 is connected in series between a second terminal 206 of transducer 192 and electrical ground. Voltage controlled resistor 204 has a resistance corresponding to the magnitude of a feedback voltage applied to its control terminal 208. The feedback voltage is generated by a differential amplifier 210 that functions to adjust the resistance of voltage controlled resistor 204 so that transducer 192 forms acoustic waves of the preselected amplitude on display surface 14.

Terminals 212 and 214 of transducer 194 are electrically connected to a buffer circuit 216 and electrical ground, respectively. Transducer 194 generates the AC sensing signal with an amplitude corresponding to the amplitude of the acoustic waves on display surface 14. Tranducer 194 delivers the AC sensing signal to buffer circuit 216, which functions as an interface between transducer 194 and a half-wave rectifier circuit 218. Half-wave rectifier 218 cooperates with a low pass filter 220 to form a substantially DC sensing signal corresponding to the amplitude of the acoustic waves on display surface 14. The DC sensing signal is delivered to differential amplifier 210 and a touch detection comparator 222.

In the NO TOUCH state, touch detection comparator 222 compares the DC sensing signal to a touch detection reference voltage. The DC sensing signal has a voltage magnitude greater than that of the touch detection reference signal, and comparator 222 delivers a control signal representing the NO TOUCH state to control input 68 of address encoding circuit 50.

Differential amplifier 210 compares the DC sensing signal to an amplitude reference voltage corresponding to the preselected acoustic wave amplitude. Differential amplifier 210 delivers to control input 208 a feedback voltage of a magnitude that is proportional to the voltage difference between the DC sensing signal and the amplitude reference voltage. Whenever the voltage difference is a preselected value, voltage controlled resistor 204 establishes a resistance that causes transducer 192 to maintain the preselected acoustic wave amplitude on display surface 14. Whenever the voltage difference is not the preselected value, voltage controlled resistor 204 establishes a resistance that causes transducer 192 to restore the preselected acoustic wave amplitude on display surface 14.

At the start of the TOUCH state, stylus 196 in contact with faceplate 54 causes a decrease in the amplitude of the acoustic waves on display surface 14. Accordingly, the amplitude of the AC sensing signal generated by transducer 194 is decreased, and the magnitude of the DC sensing signal formed by rectifier 218 and low pass filter 222 is decreased.

Touch detection comparator 222 compares the decreased DC sensing signal to the touch detection reference voltage. Whenever stylus 196 is in contact with faceplate 54 for a period longer than the time constant of low pass filter 220 (e.g., 0.5 second), the decreased DC sensing signal has a voltage magnitude less than that of the touch detection reference voltage, and comparator 222 delivers a control signal representing the TOUCH state to control input 68 of address encoding circuit 50.

After comparator 222 generates the control signal representing the TOUCH state, the preselected acoustic wave amplitude is restored on display surface 14, as described above with reference to the NO TOUCH state. In particular, differential amplifier 210 delivers to control input 208 a feedback voltage proportional to the voltage difference between the decreased DC sensing signal and the amplitude reference voltage. The voltage controlled resistor 204 establishes a resistance that causes transducer 192 to restore the preselected acoustic wave amplitude on display surface 14.

It will be appreciated, therefore, that voltage controlled resistor 204 and differential amplifier 210 provide an automatic gain control feature that maintains the preselected acoustic wave amplitude on display surface 14 during the NO TOUCH state, and restores the preselected acoustic wave amplitude on display surface 14 after detection of the TOUCH state. This automatic gain control feature provides a typically fixed relationship between the voltage magnitudes of the DC sensing signal and the touch detection reference voltage, thereby allowing touch detection subcircuit 198 to accurately detect contact between stylus 196 and faceplate 54.

It will be obvious to those having skill in the art that many changes may be made in the above-described details of the present invention without departing from the underlying principles thereof. For example, the DC sensing signal of touch detection apparatus 190 could be delivered to an analog-to-digital converter to more completely characterize the contact between stylus 196 and faceplate 54. The scope of the present invention should be determined, therefore, only by the following claims.

## Claims

1. An optical touch panel system for generating an address signal representing a location on a display surface selected by contact with a stylus, comprising:
touch detecting means for detecting contact between the stylus and the display surface and for generating a control signal indicative of such contact;
light emitting means for directing a light beam across and proximal to the display surface;
light detecting means in optical communication with the light emitting means for detecting an interruption of the light beam by a stylus in contact with or adjacent the display surface; and
address encoding means receiving the control signal and communicating with the light detecting means for generating the address signal whenever the touch detecting means detects contact between the stylus and the display surface.

2. The system of claim 1 in which the stylus has a nonzero capacitance with reference to an electrical ground and in which the touch detecting means includes an optically transparent, electrically conductive layer that is positioned on the display surface, and the system further comprising capacitance detecting means for detecting the capacitance of the stylus whenever it contacts the conductive layer.

3. The system of claim 2 in which the capacitance detecting means includes a circuit that has resonance characteristics at, and receives a signal of, a preselected frequency,
whereby contact between the stylus and the conductive layer changes the resonance characteristics
of the circuit to provide an indication of the contact.

4. The system of claim 2 in which the conductive layer has a predetermined capacitance with reference to the electrical ground and receives a signal of a preselected frequency, and in which the capacitance detecting means includes an inductor electrically connected to and cooperating with the conductive layer to form a circuit having resonance characteristics at the preselected frequency,
whereby contact between the stylus and the conductive layer changes the resonance characteristics of the circuit to provide an indication of the contact.

5. The system of claim 2 in which the selected location corresponds to a display location on a display screen of a display device, and in which the conductive layer is positioned on an optically transparent faceplate that is positioned in face-to-face relation to the display screen and functions as the display surface.

6. The system of claim 1 in which the selected location corresponds to a display location on a display screen of a display device, an optically transparent faceplate is positioned in face-to-face relation to the display screen and functions as the display surface, the stylus in contact with the selected location exerts pressure against the faceplate, and the touch detecting means includes pressure detecting means for detecting pressure exerted against the faceplate and for generating the control signal in response to such pressure.

7. The system of claim 6 in which the faceplate includes plural side margins and in which the pressure detecting means includes a pressure transducer that communicates with the faceplate and is positioned adjacent one of the side margins.

8. The system of claim 6 in which the faceplate includes plural side margins and in which the pressure detecting means includes plural pressure transducers that communicate with the faceplate and are positioned adjacent different ones of the side margins.

9. The system of claim 8 in which ones of the pressure transducers are positioned adjacent each one of the side margins.

10. The system of claim 1 in which the stylus has at least a threshold amount of mass, and in which the touch detecting means further comprises acoustic wave means coupled to the display surface for generating an acoustic wave thereon and for detecting the amplitude of the acoustic wave, whereby the stylus in contact with the display surface changes the amplitude of the acoustic wave to provide an indication of contact between the stylus and the display surface.

11. The system of claim 10 in which the acoustic wave generating means generates a standing acoustic wave on the display surface.

12. The system of claim 1 in which the selected location corresponds to a display location on a display screen of a display device, an optically transparent faceplate is positioned in face-to-face relation to the display screen and functions as the display surface, the stylus has at least a threshold amount of mass, and the touch detecting means includes acoustic wave means coupled to the faceplate for generating an acoustic wave thereon and for detecting the amplitude of the acoustic wave, whereby the stylus in contact with the faceplate changes the amplitude of the acoustic wave to provide an indication of contact between the stylus and the display surface.

13. The system of claim 1 in which the light emitting means directs multiple light beams across and proximal to the display surface and the light detecting means detects interruptions of a multiple light beams, whereby the stylus in contact with the display surface interrupts light beams corresponding to the selected location.

14. In an optical touch panel system that indicates a selected location on a display surface in accordance with a light beam that propagates across and proximal to the display surface and is interrupted by a stylus having a nonzero capacitance with reference to electrical ground, an apparatus that detects contact between the stylus and the display surface, comprising:
an optically transparent, electrically conductive layer that is positioned on the display surface; and
capacitance detecting means for detecting the capacitance of the stylus whenever it contacts the conductive layer.

15. In an optical touch panel system that indicates a selected location on a display surface in accordance with a light beam that propagates across and proximal to the display surface and is interrupted by a stylus that exerts pressure against the display surface, an apparatus that detects contact between the stylus and the display surface, comprising:
an optically transparent faceplate that supports the display surface; and
pressure detecting means in communication with the faceplate for detecting pressure exerted by the stylus whenever it contacts the display surface.

16. In an optical touch panel system that indicates a selected location on a display surface in accordance with a light beam that propagates across and proximal to the display surface and is interrupted by a stylus that includes at least a threshold amount of mass, an apparatus that detects contact between the stylus and the display surface, comprising:
an optically transparent faceplate that supports the display surface; and
acoustic wave means coupled to the display surface for generating an acoustic wave thereon and for detecting the amplitude of the acoustic wave, whereby the stylus in contact with the display surface changes the amplitude of the acoustic wave to provide an indication of the contact.

FIG.1

FIG.2

EP 0 372 964 A2

NO TOUCH ←——→ TOUCH

FIG. 3

FIG. 4A

FIG. 4B

182 54 20 44 184 16 56 22 182 186

TOUCH DETECTION SUBCIRCUIT

68

ADDRESS ENCODING CIRCUIT

50

FIG.5

180 50

194 54 20 44 196 16 56 14 192 22 198 50

TOUCH DETECTION SUBCIRCUIT

68

ADDRESS ENCODING CIRCUIT

FIG.6

190

OSCILLATOR 200

192 202

206

210 208 204

FIG.7

212

194

214

BUFFER 216

HALF-WAVE RECTIFIER 218

LOW PASS FILTER 220

DIFFERENTIAL AMPLIFIER

VOLTAGE CONTROLLED RESISTOR

50

198

222 68

TOUCH DETECTION COMPARATOR

ADDRESS ENCODING CIRCUIT

EP 0 372 964 A2